# EUROPÄISCHE PATENTSCHRIFT

(11) **EP 1 154 238 B1**
(45) Veröffentlichungstag und Bekanntmachung des Hinweises auf die Patenterteilung: **13.08.2008**
(21) Anmeldenummer: 01111496.4
(22) Anmeldetag: 11.05.2001
(51) Int. Cl.: G01D 5/14

(54) **Drehwinkelsensor**
Angular position sensor
Capteur de la position angulaire

(30) Priorität: 13.05.2000 DE 20008663 U
(43) Veröffentlichungstag der Anmeldung: 14.11.2001
(73) Patentinhaber: AB Elektronik GmbH, 59368 Werne (DE)
(72) Erfinder: Apel,Peter, 59394 Südkirchen (DE)
(74) Vertreter: Hoffmeister, Helmut

(56) Entgegenhaltungen:
- EP-A- 0 670 472
- WO-A-98/08060
- US-A- 5 789 917
- US-A- 5 861 745

## Beschreibung

Die Erfindung betrifft einen Drehwinkelsensor zur berührungslosen Erfassung eines Drehwinkels, der u.a. folgende Teilen besitzt:
- einen Stator, der aus wenigstens zwei Statorsegmenten besteht, die unter Belassung wenigstens einer Abstandsausnehmung zueinander angeordnet sind,
- einen Rotor mit wenigstens einem Ringmagnetsegment, das unter Belassung eines Luftspalts in einer Rotationsachse gegenüber den Statorsegmenten zu bewegen ist, wobei der Rotor an einer in der Rotationsachse angeordneten Rotorwelle gehalten ist,
- und wenigstens eine Hall-Einheit, die in einer der Abstandsausnehmungen angeordnet ist.

Ein Drehwinkelsensor der vorgenannten Art ergibt sich aus der US - A - 5 789 917. Bei diesem bekannten Drehwinkelsensor ist weiterhin ein Gehäusekörper eingesetzt, der den Rotor und den Stator wenigstens teilweise umgibt und der das Ringmagnetsegment hält. Die Rotorwelle endet frei.

Drehwinkelsensoren sind außerdem bekannt aus der WO 95 14 911 A1, die eine stationäre und eine rotierende Formation aufweisen. Die stationäre Formation enthält zwei halbmondförmige Statorelemente, zwischen denen sich eine Abstandsausnehmung befindet, in der ein Hallelement angeordnet ist. Die rotierende Formation weist ein ringförmig ausgebildetes Magnetelement auf, das von einer Halteeinheit gehalten wird und unter Belassung eines Luftspalts um die Statorelemente bewegbar ist.

Aus der EP-A-0 670 472 ("Rotary position sensor") ist ein Drehwinkelsensor bekannt, bei dem eine Hall-Einheit in einem Luftspalt angeordnet ist, der von zwei drehbeweglich angeordneten beabstandeten Magneten gebildet wird. Ein Stator im Sinne des Standes der Technik gem. US-A-5 789 917 ist nicht vorhanden. Ein dort beschriebener "rotary cup" mit einer Rotationsachse, der nicht mit Ringmagnetsegmenten bestimmt ist, stellt keinen Gehäuseboden dar, sondern ist lediglich Träger der seitlich und exzentrisch zur Rotationsachse drehbar angeordneten Magnete.

Es stellt sich demnach die Aufgabe, die Rotorwelle, die die Ringmagnetsegmente trägt, mit einem Gehäusekörper so zu verbinden, dass der Aufbau des Drehwinkelsensors vereinfacht wird.

Diese Aufgabe wird bei einem Drehwinkelsensor mit den Merkmalen des Patentanspruchs 1 gelöst.

Durch die in den Unteransprüchen aufgeführten Maßnahmen sind vorteilhafte Weiterbildungen der Erfindung und Verbesserungen der im Anspruch 1 angegebenen Vorrichtung möglich.

Ausführungsbeispiele der Erfindung, anhand dessen deren Vorteile mit erläutert werden, sind in der Zeichnung dargestellt und werden im folgenden näher beschrieben. Es zeigen in schematischer Darstellung:
- Fig. 1: eine Schnittdarstellung eines Drehwinkelsensor mit einer Lagerung innerhalb der Sensoreinheit,
- Fig. 2a: einen Schnitt durch einen Drehwinkelsensor gemäß Fig. 1 entlang der Linie IIA - IIA,
- Fig. 2b: einen Schnitt durch einen Drehwinkelsensor gemäß Fig. 1 entlang der Linie IIB - IIB,
- Fig. 3: eine Schnittdarstellung eines Drehwinkelsensors mit einer Lagerung außerhalb der Sensoreinheit,
- Fig. 4: eine Schnittdarstellung eines Drehwinkelsensors mit einer Schnappverbindung und
- Fig. 5: eine Schnittdarstellung durch einen Drehwinkelsensor mit einem am Wellenelement angeordneten Ringmagnet-element.

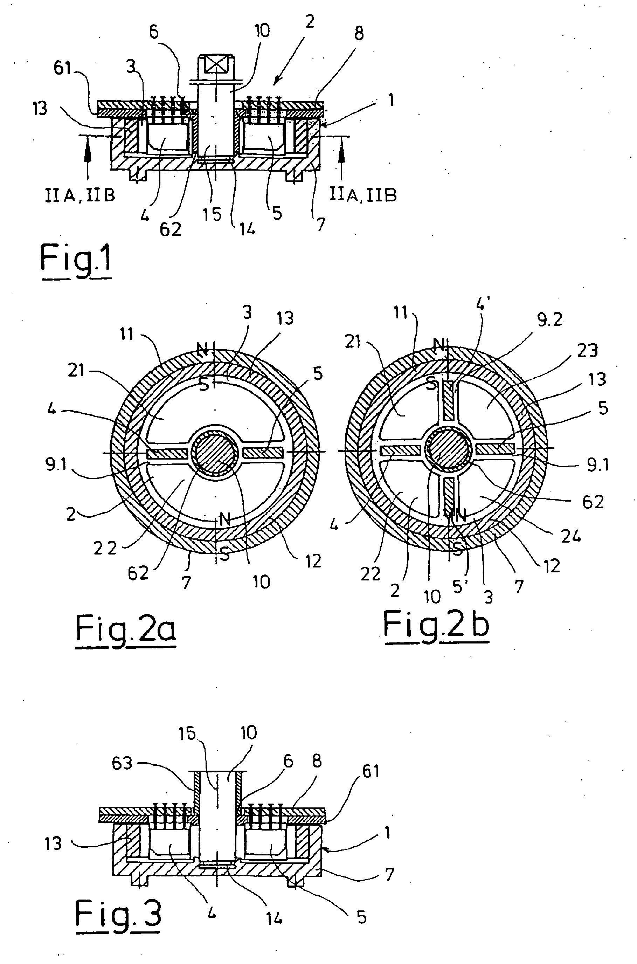

In den Fig. 1 bis 5 werden für gleiche Teile gleiche Bezugszeichen verwendet.

Wie die Fig. 1 bis 5 zeigen, weist ein Drehwinkelsensor
- einen Rotor 1 und
- einen Stator 2 auf.

Der Stator 2 besteht gemäß Fig. 2a aus einem Statorsegment 21 und einem Statorsegment 22. Beide Statorsegmente sind apfelsinenscheibenförmig ausgebildet. Hervorzuheben ist, daß die Statorteile keine scharfen Kanten aufweisen.

Zwischen beiden Statorsegmenten 21, 22 befindet sich eine Abstandsausnehmung 9.1, in der zwei Hall-Einheiten 4, 5 angeordnet sind. Beide Hall-Einheiten können als Hall-Element oder Hall-IC-Schaltkreis ausgebildet sein. Die Segmente 21, 22 werden an einem Achsenplattenkörper 61 gehalten, der im rechten Winkel zu einer Rotationsachse 15 angeordnet ist. Auf dem Körper 61 befindet sich eine Leiterplatte 9, deren Bauelemente mit den Hall-Einheiten 4, 5 verbunden sind.

Wie Fig. 1 zeigt, ist mit dem Achsenplattenkörper ein Achsenhohlzylinder 62 verbunden. Der Achsenhohlzylinder befindet sich unterhalb des Achsenplattenkörpers 61.

In Fig. 3 ist eine andere Ausführungsform gezeigt. Hier ist ein Achsenhohlzylinder 63 auf dem Achsenplattenkörper angeordnet.

Eine weitere Ausführungsform des Stators 2 ist in Fig. 2b gezeigt. Er besteht aus vier Statorsegmenten 21, 22, 23, 24, zwischen denen sich zwei um 90° versetzt angeordnete Abstandsausnehmungen 9.1, 9.2 befinden. Die Segmente 21, ..., 24 sind viertelkreisförmig ausgebildet. Ihre Ecken sind gerundet. In der Abstandsausnehmung 9.1 befinden sich die Hall-Einheiten 4, 5, in der Abstandsausnehmung 9.2 Hall-Einheiten 4', 5', die alle mit der Leiterplatte 8 verbunden sind. Die vier Hall-Einheiten ermöglichen unterschiedlichste Winkelerfassungsvarianten zwischen 90 und 360°.

Der Rotor 1 weist gemäß den Fig. 1 bis 4 ein Ringmagnetelement 13 auf, das an einer senkrecht stehenden Achse 20 auf einer Seite eine Nord-Süd-Polung N S und auf einer gegenüberliegenden Seite eine Süd-Nord-Polung S N aufweist. Hierdurch entstehen quasi zwei sich gegenüberliegende Ringmagnetsegmente 11, 12. Die besondere Polung der beiden Ringmagnetsegmente 11, 12 sichert, dass der magnetische Fluss einen geraden Verlauf hat. Dieses so ausgebildete Ringmagnetelement 13 ist unter Belassung eines Luftspalts 3 um die beiden Statorsegmente 20, 22 gemäß Fig. 2a oder die vier Statorsegmente 20, 21, 22, 23 zu bewegen.

Anstelle eines Ringmagnetelements 13 kann nur das eine Ringmagnetsegment 11 um die Statorsegmente unter Belassung des Luftspalts 3 rotieren. Auch hierdurch ist ein gerader Verlauf des magnetischen Flusses gesichert.

Erfindungswesentlich ist, dass das Ringmagnetelement 13 oder eines der Ringmagnetsegmente in einem topfförmigen Gehäusekörper 7 gehalten werden. Ist der Gehäusekörper aus Kunststoff, lassen sich das Ringmagnetelement oder das Magnetsegment lagegerecht einformen.

Mit dem Gehäusekörper ist eine Rotorwelle 10 verbunden, die in der Rotationsachse 15 rotiert. Die Rotorwelle ist durch den Achsenhohlköper 62 (vgl. Fig. 1) oder den Achsenhohlkörper 63 (vgl. Fig. 3) geführt, so dass die Rotorwelle innerhalb oder außerhalb der Sensoreinheit gelagert ist. In den Gehäuseboden ist sie entweder eingeformt oder eingeklippst.

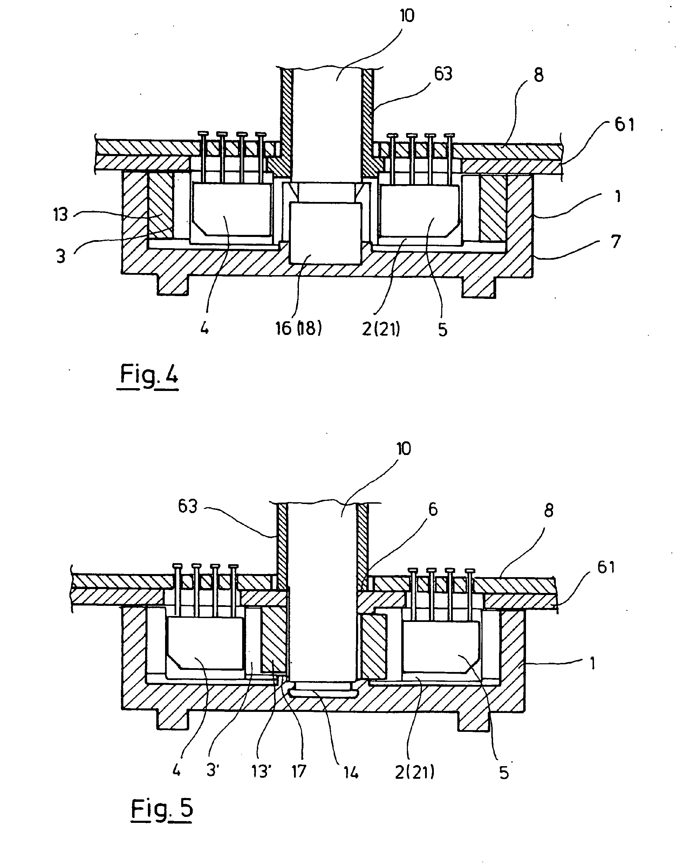

Fig. 4 zeigt eine andere Form der Rotorwelle 10 mit dem Gehäusekörper 7. Und zwar ist hier die Welle starr und mit einer Schnappverbindung mit dem Gehäusekörper verbunden. Auf dem Gehäusekörperboden ist ein Schnappverbindungselement 16 mit einem Drehelement 18 angeordnet. Bei der Montage wird das Gehäuse mit seinen Einbauten mit dem Schnappelement auf das Ende der starren Welle gedrückt und damit verbunden. Der Gehäusekörper 7 dreht sich in dem Drehelement. Möglich sind auch andere ähnliche Verbindungen des Gehäusekörpers mit der starren Welle.

Der Gehäusekörper wird damit Teil des Rotors 1 und ist sowohl Magnethalterung als auch Schutz der empfindlichen Teile des Drehwinkelsensors gegenüber äußeren Einflüssen.

Von besonderem Vorteil ist, dass ein solcher Sensor eine sehr geringe Bauhöhe hat, sich leicht montieren läßt und sehr preisgünstig herzustellen ist.

In Fig. 5 ist ein Drehwinkelsensor gezeigt, bei dem ein Ringmagnetelement 13' an der Rotorwelle 10 angebracht ist. Anstelle des Ringmagnetelements 13' kann ebenso wie anstelle des Ringmagnetelements 13 ein Ringmagnetsegment eingesetzt werden. Ihr Aufbau ist gleich, nur dass das Ringmagnetelement 13' einen kleineren Durchmesser hat und in den Statorsegmenten 21, 22 bzw. 21, 22, 23, 24 unter Belassung eines Luft-spaltes 3' rotiert.

Der übrige Aufbau des Stators 2 mit den Abstandsausnehmungen und den darin befindlichen Halleinheiten ist ähnlich. Das gleiche trifft auf den Achsenhaltekörper 6, die Verbindungsmöglichkeiten zwischen Rotorwelle 10 und Gehäusekörper einschließlich der beschriebenen Schnappverbindung zu.

Zur magnetischen Isolierung zwischen der Rotorwelle und dem Ringmagnetelement 13' kann ein Isolierkörper 17 vorgesehen werden. Er kann entfallen, wenn die Rotorwelle 10 aus einem magnetisch nicht leitenden Material hergestellt ist.

## Patentansprüche

1. Drehwinkelsensor zur berührungslosen Erfassung eines Drehwinkels, mit folgenden Teilen:
- ein Stator (2), der aus wenigstens zwei Statorsegmenten (21, 22, 23 24) besteht, die unter Belassung wenigstens einer Abstandsausnehmung (9.1, 9.2) zueinander angeordnet sind,
- ein Rotor (1) mit wenigstens einem Ringmagnetsegment (11, 12, 13, 13'), das unter Belassung eines Luftspalts (3, 3') in einer Rotationsachse (15) gegenüber den Statorsegmenten (21, 22, 23, 24) zu bewegen ist, wobei der Rotor an einer in der Rotationsachse (15) angeordneten Rotorwelle (10) gehalten ist,
- ein Gehäusekörper (7), der den Rotor (1) und den Stator (2) wenigstens teilweise umgibt und der das Ringmagnetsegment (11, 12, 13) hält,
- wobei die Rotorwelle (10) an dem Gehäusekörper (7) angeordnet ist und der Gehäusekörper (7) topfförmig ausgebildet ist, wobei auf seinem Gehäuseboden die RotorWelle (10) befestigt ist;
- wenigstens eine Hall-Einheit (4, 5, 4', 5'), die in einer der Abstandsausnehmungen (9.1, 9.2) angeordnet ist,
- wobei rechtwinklig zur Rotationsachse (15) ein Achsenhaltekörper (6) angeordnet ist, der die Statorsegmente (21, 22, 23, 24) hält und mit dem die Rotorwelle (10) geführt ist.

2. Drehwinkelsensor nach Anspruch 1, **dadurch gekennzeichnet, dass** der Achsenhaltekörper (6) gegenüber den Statorsegmenten (21, 22, 23, 24) magnetisch isoliert ist.

3. Drehwinkelsensor nach Anspruch 1 oder 2, **dadurch gekennzeichnet, dass** auf dem Achsenhaltekörper (6) eine Leiterplatte (8) mit wenigstens einem Bauelement angeordnet ist.

4. Drehwinkelsensor nach einem der Ansprüche 1 bis 3, **dadurch gekennzeichnet, dass** der Achsenhaltekörper einen Achsenplattenkörper (61) aufweist, der mit einem Achsenhohlkörper (62, 63) versehen ist, der die Rotorwelle (10) wenigstens teilweise umgibt.

5. Drehwinkelsensor nach einem der Ansprüche 1 bis 4, **dadurch gekennzeichnet, dass** der Achsenhohlkörper (63) auf dem Achsenplattenkörper (61) angeordnet ist.

6. Drehwinkelsensor nach einem der Ansprüche 1 bis 5, **dadurch gekennzeichnet, dass** der Achsenhohlkörper (62) unterhalb des Achsenplattenkörpers (61) angeordnet ist.

7. Drehwinkelsensor nach Anspruch 1, **dadurch gekennzeichnet, dass** die Rotorwelle (10) starr ist und mit einem Schnappverbindungselement (16) mit dem Gehäusekörper (7) verbunden ist.

8. Drehwinkelsensor nach Anspruch 7, **dadurch gekennzeichnet, dass** das Schnappverbindungselement (16) ein Drehelement (18) aufweist.

9. Drehwinkelsensor nach Anspruch 1, **dadurch gekennzeichnet, dass** der Gehäusekörper (7) aus Kunststoff ist, in den das erste Ringmagnetsegment (11, 12, 13) wenigstens teilweise eingeformt ist.

10. Drehwinkelsensor nach einem der Ansprüche 1 bis 13, dass das Ringmagnetsegment (13') an der Rotorwelle (10) angeordnet ist.

11. Drehwinkelsensor nach Anspruch 10, **dadurch gekennzeichnet, dass** zwischen der Rotorwelle (10) und dem Ringmagnetsegment (13') ein Isolierkörper (18) angeordnet ist.

## Claims

1. Rotational angle sensor for the contactless detection of a rotational angle, having the following parts:
- a stator (2) which consists of at least two stator segments (21, 22, 23, 24) which are disposed with respect to each other so as to leave at least one spacing recess (9.1, 9.2),
- a rotor (1) having at least one toric magnet segment (11, 12, 13, 13') which is to be moved with respect to the stator segments (21, 22, 23, 24) in a rotational axis (15) leaving a gap (3, 3'), wherein the rotor is secured on a rotor shaft (10) disposed in the rotational axis (15),
- a housing body (7) which at least partially surrounds the rotor (1) and the stator (2) and retains the toric magnet segment (11, 12, 13),
- wherein the rotor shaft (10) is disposed on the housing body (7) and the housing body (7) is formed in a cup-shaped manner, wherein the rotor shaft (10) is attached to its housing base,
- at least one Hall unit (4, 5,4',5') which is disposed in one of the spacing recesses (9.1,9.2),
- wherein an axial retaining body (6) is disposed at right angles to the rotational axis (15), retains the stator segments (21, 22, 23, 24) and by means of which the rotor shaft (10) is guided.

2. Rotational angle sensor as claimed in Claim 1, **characterised in that** the axial retaining body (6) is magnetically insulated from the stator segments (21, 22, 23, 24).

3. Rotational angle sensor as claimed in Claim 1 or 2, **characterised in that** a conductor plate (8) having at least one constructional element is disposed on the axial retaining body (6).

4. Rotational angle sensor as claimed in any one of Claims 1 to 3, **characterised in that** the axial retaining body comprises an axial plate body (61) which is provided with a axial hollow body (62, 63) which at least partially surrounds the rotor shaft (10).

5. Rotational angle sensor as claimed in any one of Claims 1 to 4, **characterised in that** the axial hollow body (63) is disposed on the axial plate body (61).

6. Rotational angle sensor as claimed in any one of Claims 1 to 5, **characterised in that** the axial hollow body (62) is disposed beneath the axial plate body (61).

7. Rotational angle sensor as claimed in Claim 1, **characterised in that** the rotor shaft (10) is fixed and is connected to the housing body (7) by a snap-on connection element (16).

8. Rotational angle sensor as claimed in Claim 7, **characterised in that** the snap-on connection element (16) comprises a rotational element (18).

9. Rotational angle sensor as claimed in Claim 1, **characterised in that** the housing body (7) consists of synthetic material, into which the first toric magnet segment (11, 12, 13) is at least partially moulded.

10. Rotational angle sensor as claimed in any one of Claims 1 to 13 [*sic*], in that the toric magnet segment (13') is disposed on the rotor shaft (10).

11. Rotational angle sensor as claimed in Claim 10, **characterised in that** an insulating body (18) is disposed between the rotor shaft (10) and the toric magnet segment (13').

## Revendications

1. Capteur de position angulaire apte à détecter une position angulaire, incluant les éléments suivants:
un stator (2) qui se compose d'au moins deux segments (21, 22, 23, 24) de stator qui sont disposés l'un par rapport à l'autre de façon à ménager au moins un évidement d'espacement (9.1, 9.2),
un rotor (1) comportant au moins un segment magnétique annulaire (11, 12, 13, 13'), apte à tourner autour d'un axe de rotation (15) par rapport aux segments (21, 22, 23, 24) de stator en ménageant un entrefer (3, 3'), le rotor étant tenu à un axe (10) de rotor monté à rotation autour de l'axe de rotation (15),
un corps (7) de boîtier qui entoure au moins partiellement le rotor (1) et le stator (2) et tient le segment magnétique annulaire (11, 12, 13),
dans lequel l'axe (10) de rotor est disposé sur le corps (7) de boîtier et le corps (7) de boîtier est en forme de coupelle, l'axe (10) de rotor étant fixé sur son fond de boîtier,
au moins une unité à effet Hall (4, 5, 4', 5') qui est disposée dans l'un des évidements d'espacement (9.1, 9.2), et
dans lequel un corps de maintien (6) d'axe, qui tient les segments (21, 22, 23, 24) de stator et guide l'axe (10) de rotor, est disposé perpendiculairement à l'axe de rotation (15).

2. Capteur de position angulaire selon la revendication 1, **caractérisé en ce que** le corps de maintien (6) d'axe est isolé magnétiquement par rapport aux segments (21, 22, 23, 24) de stator.

3. Capteur de position angulaire selon la revendication 1 ou 2, **caractérisé en ce qu'**une carte (8) de circuits imprimés portant au moins un composant est disposée sur le corps de maintien (6) d'axe.

4. Capteur de position angulaire selon l'une quelconque des revendications précédentes, **caractérisé en ce que** le corps de support d'axe comprend un corps (61) de plaque d'axe qui comporte un corps creux (62, 63) d'axe qui entoure au moins partiellement l'axe (10) de rotor.

5. Capteur de position angulaire selon l'une quelconque des revendications précédentes, **caractérisé en ce que** le corps creux (63) d'axe est disposé sur le corps (61) de plaque d'axe.

6. Capteur de position angulaire selon l'une quelconque des revendications précédentes, **caractérisé en ce que** le corps creux (62) d'axe est disposé au dessous du corps (61) de plaque d'axe.

7. Capteur de position angulaire selon la revendication 1,
**caractérisé en ce que** l'axe (10) de rotor est immobile et attaché au corps (7) de boîtier par un élément d'attache (16) à encliquetage.

8. Capteur de position angulaire selon la revendication 7,
**caractérisé en ce que** l'élément d'attache (16) à encliquetage comprend un palier (18).

9. Capteur de position angulaire selon la revendication 1,
**caractérisé en ce que** le corps (7) de boîtier est en matière plastique et que le premier segment magnétique annulaire (11, 12, 13) y est au moins partiellement moulé.

10. Capteur de position angulaire selon l'une quelconque des revendications précédentes, **caractérisé en ce que** le segment magnétique annulaire (13') est monté sur l'axe (10) de rotor.

11. Capteur de position angulaire selon la revendication 10,
**caractérisé en ce qu'**un corps isolant (18) est disposé entre l'axe (10) de rotor et le segment magnétique annulaire (13').
